# EUROPEAN PATENT SPECIFICATION

(11) **EP 4 244 713 B1**
(45) Date of publication and mention of the grant of the patent: **02.09.2026**
(21) Application number: 20808325.3
(22) Date of filing: 16.11.2020
(51) Int. Cl.: G06F 7/499

(54) **A PROCESSOR AND A PROCESSING METHOD FOR AN EFFICICENT ACCUMULATION USING AN AUXILARY REGISTER**
PROZESSOR UND VERARBEITUNGSVERFAHREN FÜR EFFIZIENTE AKKUMULATION UNTER VERWENDUNG EINES HILFSREGISTERS
PROCESSEUR ET PROCÉDÉ DE TRAITEMENT POUR UNE ACCUMULATION EFFICACE À L'AIDE D'UN REGISTRE AUXILIAIRE

(43) Date of publication of application: 20.09.2023
(73) Proprietor: Huawei Technologies Co., Ltd., Shenzhen, Guangdong 518129 (CN)
(72) Inventor: BAR, Moti, 80992 Munich (DE); ERAN, Alon, 80992 Munich (DE); GAL, Avraham, 80992 Munich (DE)
(74) Representative: Körber, Martin Hans
(86) International application number: PCT/EP2020/082232
(87) International publication number: WO 2022/100865

(56) References cited:
- US-A- 5 826 072
- US-A1- 2016 048 374
- US-B1- 10 747 534

## Description

### TECHNICAL FIELD

The present disclosure, in some embodiments thereof, relates to computing systems and, more specifically, but not exclusively, to a processor and a processing method for an efficient accumulation with an auxiliary register.

### BACKGROUND

In computing, especially, in digital signal processing (DSP), specifically when computing with fixed point values (fractional or integer), the multiply-accumulate operation is a common step that computes the product of two numbers and adds the result product to an accumulator register. The hardware unit that performs the operation is known as a multiplier-accumulator (MAC, or MAC unit). The operation itself is also often called a MAC or a MAC operation. The basic MAC operation is W = W + x*y, where W denotes an accumulator register, and x and y denotes two multiplicands (which are the source operands).

Typically, for a given input data width, the accumulator register W width is twice the input data width plus a number of guard bits. These guard bits define the upper bound on the length of the multiply accumulate sequence of operations, before potentially the accumulator register would overflow (wrap around or saturate, according to the specific implementation of the MAC operation).

For example, for 8 bits source operands and 8 guard bits, an accumulator register of 8*2+8 = 24 bits, is used. This 24 bits accumulator register enables up to 256 accumulations for full range of 2's complement source data.

After the "accumulation loop" of MAC operations, the accumulator register is typically scaled (shifted) saturated and truncated/rounded, hence only 16 or 8 bits data will be written to memory.

US 10,747,534 B1 discloses one or more DSPs that multiply a first operand with a second operand by a multiply operation. The results of each multiply operation are stored in a register and then sent to an accumulate operation, where the result is accumulated to a multi-result vector received from a previous DSP and an offset value stored in the register.

### SUMMARY

It is an object of the present disclosure to provide a processor and a processing method for an efficient accumulation of multiplications using an auxiliary vector register. The use of the auxiliary vector register enables to split the accumulator vector register of a given size to a larger number of lanes than possible without the auxiliary vector register. Thereby increasing throughput of the processor and using the full throughput of the MAC.

The foregoing and other objects are achieved by the features of the independent claims. Further implementation forms are apparent from the dependent claims, the description and the figures.

According to a first aspect of the present disclosure, a processor is disclosed. The processor includes: at least one accumulator vector register having multiple lanes of N bits per lane, wherein n most significant bits, MSBs, of each lane of the accumulator vector register are guard bits, and
at least one auxiliary vector register having multiple lanes of M bits per lane, where M>n. The processor also includes a non-transitory memory storing a code for execution by the processor, the code when executed by the processor causing the processor to:
accumulate a result of one or more multiplications of two multiplicands in the accumulator vector register; alternatively, accumulate the result of one or more instructions that result in an accumulation (for example an AddAccumulate instruction can add an addition result into an accumulator);
add the guard bits of each lane of the at least one accumulator vector register to all bits of each corresponding lane of the at least one auxiliary vector register, and obtain an addition result;
store the addition result to each corresponding lane of the at least one auxiliary vector register; and
clear the guard bits of each lane of the at least one accumulator vector register.

It is noted that clearing the guard bits in the context of this description implies setting them according to the sign bit of the guard, i.e. if the sign bit is one, clearing sets all the bits to one, if the sign bit is zero, clearing sets all the bits to zero. Storing the additions of guard bits in the at least one auxiliary vector register redundant the need to increase the accumulator vector register, which decrease the throughput of the MAC operation.

In a further implementation of the first aspect, the code is a first code and the non-transitory memory further stores a second code for execution by the processor, the second code when executed by the processor causing the processor to:
concatenate the M bits of each corresponding lane of the at least one auxiliary vector register with the N-n bits of each lane of the at least one accumulator vector register, thereby obtain a number of M+N-n bits, wherein the M bits of the each corresponding lane of the at least one auxiliary register are the MSBs and the N-n bits of each lane of the at least one accumulator vector register are the least significant bits, LSBs;
shift right a predefined amount of shifts j, of the bits, of each lane obtaining a M+N-n bits number; and
store the M LSBs of the obtained M+N-n bits number of each lane to a corresponding lane of a vector register of M bits.

In a further implementation of the first aspect, when the obtained M+N-n bits number comprises more than M bits, the M+N-n bits number is saturated to a predefined number of bits K, wherein M≥K; and the saturated K LSBs are stored to the vector register of M bits.

In a further implementation of the first aspect, the processor further executes the code at predetermined intervals of accumulations of the multiplication products, in order to prevent the accumulator from overflowing.

In a further implementation of the first aspect, the accumulation and multiplications are for signed and/or unsigned numbers.

In a second aspect, the present disclosure relates to a processing method. The method comprises:
accumulating a result of one or more multiplications of two multiplicands in at least one accumulator vector register having multiple lanes of N bits per lane, wherein n most significant bits, MSBs, of each lane of the at least one accumulator vector register are guard bits;
adding the guard bits of each lane of the at least one accumulator vector register to all bits of each corresponding lane of an at least one auxiliary vector register having multiple lanes of M bits per lane, where M>n and obtaining an addition result;
storing the addition result to each corresponding lane of the at least one auxiliary vector register; and
clearing the guard bits of each lane of the at least one accumulator vector register.

In a further implementation of the second aspect, the method further comprises:
concatenating the M bits of the corresponding lane of the at least one auxiliary vector register with the N-n bits of each lane of the at least one accumulator vector register, thereby obtaining a number of M+N-n bits per lane, wherein the M bits of each corresponding lane of the at least one auxiliary register are the MSBs and the N bits of each lane of the at least one accumulator vector register are the least significant bits, LSBs;
shifting right a predefined amount of shifts j, of the bits, of each lane to obtain an M+N-n bits number; and
storing the M LSBs of the obtained M+N-n bits number of each lane to a corresponding lane of a vector register of M bits.

In a further implementation of the second aspect, when the obtained M+N-n bits number comprises more than M bits, the M+N-n bits number is saturated to a predefined K number of bits, wherein M≥K; and the saturated K LSBs are stored to the vector register of M bits.

In a further implementation of the first aspect, a computer program for execution by the processor is disclosed. The computer program comprising a call to the code.

In a further implementation of the first aspect, the computer program of claim 9, further comprises:
program instructions for executing, by the processor, a sequence of operations that comprises:
concatenating the M bits of each corresponding lane of the at least one auxiliary vector register with the M bits of each lane of the at least one accumulator vector register, thereby obtaining a number of M+N-n bits, wherein the M bits of each corresponding lane of the at least one auxiliary register are the MSBs and the M bits of each lane of the at least one accumulator register are the least significant bits, LSBs;
shifting right a predefined number j, of the bits, of each lane obtaining a M+N-n bits number; and
storing the M LSBs of the obtained M+N-n bits number of each lane to a corresponding lane of a vector register of M bits.

In a further implementation of the first aspect, a non-transitory storage medium storing a computer program for execution by the processor is disclosed. The computer program comprises a call to the code.

Other systems, methods, features, and advantages of the present disclosure will be or become apparent to one with skill in the art upon examination of the following drawings and detailed description. It is intended that all such additional systems, methods, features, and advantages be included within this description, be within the scope of the present disclosure, and be protected by the accompanying claims.

Unless otherwise defined, all technical and/or scientific terms used herein have the same meaning as commonly understood by one of ordinary skill in the art to which embodiments. Although methods and materials similar or equivalent to those described herein can be used in the practice or testing of embodiments, exemplary methods and/or materials are described below. In case of conflict, the patent specification, including definitions, will control. In addition, the materials, methods, and examples are illustrative only and are not intended to be necessarily limiting.

### BRIEF DESCRIPTION OF THE SEVERAL VIEWS OF THE DRAWING(S)

Some embodiments are herein described, by way of example only, with reference to the accompanying drawings. With specific reference now to the drawings in detail, it is stressed that the particulars shown are by way of example and for purposes of illustrative discussion of embodiments. In this regard, the description taken with the drawings makes apparent to those skilled in the art how embodiments may be practiced.

In the drawings:
FIG. 1 schematically shows a processor for an efficient accumulation with an auxiliary register, according to some embodiments of the present disclosure;
FIG. 2 schematically shows an implementation of a Shift Right instruction executed by processor 100, according to some embodiments of the present disclosure;
FIG. 3 schematically shows an example for a code, which demonstrates an artificial intelligence convolutional neural network (AI CNN) computations, according to some embodiments of the present disclosure;
FIG. 4 schematically shows a method for an efficient accumulation with an auxiliary register, according to some embodiments of the present disclosure; and
FIG. 5 schematically shows a method for further efficiency accumulation with an auxiliary register, according to some embodiments of the present disclosure.

### DETAILED DESCRIPTION

The present disclosure, in some embodiments thereof, relates to computing systems and, more specifically, but not exclusively, to a processor and a processing method for an efficient accumulation with an auxiliary register.

Typically, for (N-n)/2 bits wide multiplicands, the product is N-n bits wide. For Multiply accumulate (MAC) sequences, the number of excess bits in the accumulator register beyond the N-n bits are called "guard bits"(denoted as n), which enable 2^n MAC operations before an overflow might be encountered.

A known solution to the problem of lack of guard bits, is to cast the multiplicands to a wider data type, for example I=N-n. This implies a wider accumulator register in a processor, where the registers are of 2I+2n bits as opposed to N bits for the base data width, and thus lowers the vector processor's MAC throughput capabilities for the same vector width (i.e. less independent lanes can be used).

As an example, 8 bit multiplicands might have 24 bit accumulators for MACs. If the (24-2X8=) 8 bits guard is not sufficient (only 256 accumulations before overflow) then casting the 8 bit data into 16 bits and halving the vector processor throughput would be the prior art solution.

In some DSP algorithms a longer accumulation length than permitted by the number of guard bits is required, for example, artificial intelligence convolutional neural network (AI CNN) algorithms require 1000s of accumulations for 8 bit multiplicands.

There is a danger of overflow (saturation or wraparound) in the accumulator register in such computations. There are two common solutions to this problem as mentioned above.

The first solution is to extend the source data and to use wider accumulation register.

For example: extend an 8 bit source to 16 bit, thus a 32 bit accumulator will enable 2¹⁶ accumulations. This accumulator can support various of DSP algorithms but with half of the MAC throughput on the same single instruction multiple data (SIMD) machine.

The second solution is to "suspend" the multiply accumulation every given number of operations and perform counter measures, such as saving the accumulator value and resetting.

According to some embodiments of the present disclosure, an efficient solution isprovided for the case in which more accumulation steps are required than the amount enabled by the guard bits number (256 in the example above).

According to some embodiments of the present disclosure, a processor with a processing method and a set of instructions of an Add and Clear instruction and a Shift Right instruction are provided to efficiently perform the accumulations using an auxiliary vector register, thereby enabling splitting the accumulator register of a given size to a vector register with multiple lanes. The use of the auxiliary vector register enables to split the accumulator vector register in to more lanes than possible without the auxiliary vector register. Thereby, increasing the throughput of the processor in comparison to the existed solutions with negligible additional hardware and low additional complexity and using the full MAC throughput on the same single instruction multiple data (SIMD) machine.

Before explaining at least one embodiment in detail, it is to be understood that embodiments are not necessarily limited in its application to the details of construction and the arrangement of the components and/or methods set forth in the following description and/or illustrated in the drawings and/or the Examples. Implementations described herein are capable of other embodiments or of being practiced or carried out in various ways.

Embodiments may be a system, a method, and/or a computer program product. The computer program product may include a computer readable storage medium (or media) having computer readable program instructions thereon for causing a processor to carry out aspects of the embodiments.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of embodiments may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of embodiments.

Aspects of embodiments are described herein with reference to flowchart illustrations and/or block diagrams of methods, apparatus (systems), and computer program products according to embodiments. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

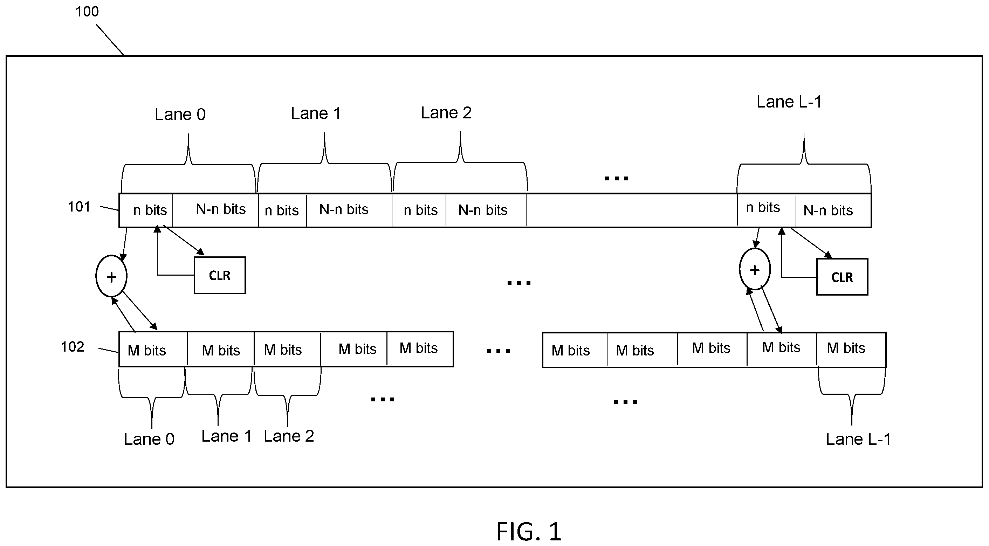

Reference is now made to FIG. 1, which schematically shows a processor for an efficient accumulation with an auxiliary register, according to some embodiments of the present disclosure.

Processor 100, executes a code for an efficient accumulation with an auxiliary register, and includes a multiple lanes accumulator vector register 101 with N bits per lane. The accumulator vector register 101 includes n most significant bits (MSB) out of the N bits per lane, which are guard bits. Processor 100 also includes a multiple lanes auxiliary vector register 102, having M bits per lane, where M > n. When a multiplication and accumulation operation is executed by the processor 100, two multiplicands of (N-n)/2 bits are multiplied and the product is stored in a lane of the accumulator vector register 101. According to some embodiments of the present disclosure, every predetermined interval of time the Add Clear instruction is executed by the processor 100, in order to prevent the accumulator from overflowing. In the Add Clear instruction, the guard bits of the lane of the accumulator vector register 101 are added to all M bits of a corresponding lane of the auxiliary vector register 102. The processor 100 stores the result of the addition to the corresponding lane of the auxiliary vector register 102 and then clears the guard bits of the accumulator vector register 101. It is noted that clearing the guard bits in the context of this description implies setting them according to the sign bit of the guard, i.e. if the sign bit is one, clearing sets all the bits to one, if the sign bit is zero, clearing sets all the bits to zero.

For example, a case where the accumulator vector register 101 is ofN=24 bits per lane, n=8 guard bits and the auxiliary vector register 102 is of 16 bits per lane. In this case, when two multiplicands of 8 bits are multiplied, the product is added to one lane of the accumulator vector register 101, and after a predetermined interval of times, for example, after a predefined number of accumulations, such as 256 accumulations in this case (since 2⁸=256) the Add Clear instruction is executed to prevent the accumulator vector register 101 from overflowing. The Add Clear instruction causes the processor to add the 8 guard bits of the lane of the accumulator vector register 101 to all 16 bits of a corresponding lane of the auxiliary vector register 102. The processor 100 stores the result of the addition to the corresponding lane of the auxiliary vector register 102 and then clears the guard bits of the accumulator vector register 101. According to some embodiments of the present disclosure, the accumulations and multiplications are for signed and/or unsigned numbers.

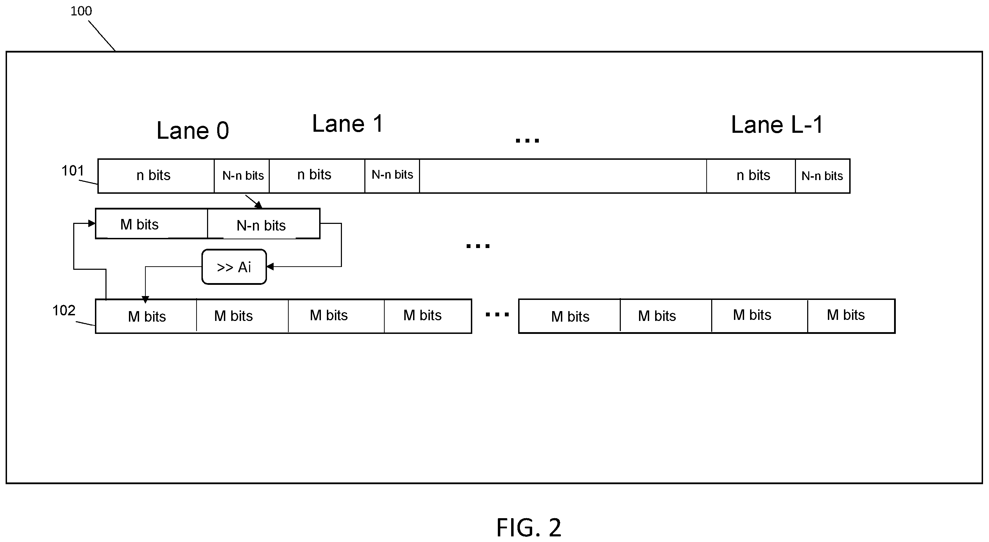

Reference is now made to FIG. 2, which schematically shows an implementation of a Shift Right instruction executed by processor 100, according to some embodiments of the present disclosure. Processor 100 executes a shift right instruction, where the processor 100 concatenates the M bits of the corresponding lane of the auxiliary vector register 102 with the N-n bits of each lane of the accumulator vector register 101, thereby obtain a number of M+N-n bits. The M bits of the corresponding lane of the auxiliary register 102 are the MSBs and the N-n bits of the lane of the accumulator vector register 101 are the least significant bits, LSBs. Then, the processor 100 shifts right a predefined amount of shifts j, of the bits, obtaining a M+N-n bits number, and stores the M LSBs of the obtained M+N-n bits number to a lane of a vector register of M bits ,which may or may not be the same register 102. According to some embodiments of the present disclosure, when the obtained M+N-n bits number, includes more than M bits, the M+N-n bits number is saturated to a predefined number of bits K, where M≥K. The saturated K LSBs are stored to the vector register lane of M bits. For example, reference is made to the case mentioned above of an accumulator vector register of 24 bit from which 8 bit are guard bits and an auxiliary vector register of 16 bits. The Shift Right instruction causes the processor to concatenate the 16 bits of the auxiliary vector register 102 with the 16 LSBs of the accumulator vector register 101, obtaining a number of 16+16=32 bits. The 16 bit of the auxiliary vector register are the MSBs, and the 16 LSBs of the accumulator vector register 101 are the LSBs. Then, in case the obtained number includes 16 bits or less, the processor shifts right a predefined amount of shifts j (for example: j= 3) of bits and obtains a number of 32 bits. Then the processor stored the 16 LSBs of the 32 bits obtained number at a register of 16 bits (which may or may not be the auxiliary vector register 102). In case the value in the 32 bits obtained from the concatenation after the shift contains more valid bits than 16 bit, then the processor could saturate the 32 bits number to a predefined number K which is smaller or equals to 16 bits, for example the highest unsigned number of 16 bits (2¹⁶=65536) or the highest number for signed 16 bits (2¹⁵-1=32767). Then the processor 100 stores the 16 LSBs of the obtained (and saturated to K bits) 32 bits number to a lane of a vector register of 16 bits. According to some embodiments of the present disclosure, the shift right instruction is executed at the completion of the total accumulation for the specific computation.

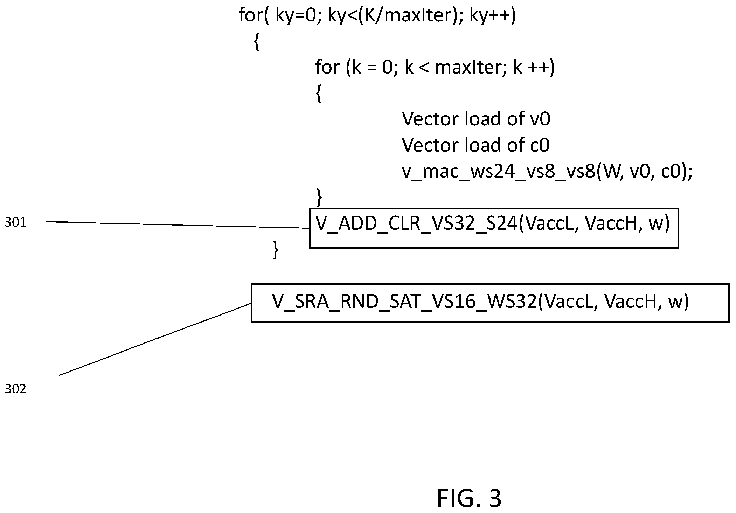

Fig. 3 schematically shows an example for a code, which demonstrates a snippet from an AI CNN computation, according to some embodiments of the present disclosure. In this example the overall number of MACs which is performed (including two nested loop) is about K. In this example, the width of the accumulator vector register is 48 bits, which can be used as a single lane of 48 bits and may also be used as 2 lanes of 24 bits each.

With the known solution of the prior art, accumulation in the accumulator vector register is a product of only one multiplier. In contrast, with the instruction according to some embodiments of the present disclosure, after the inner loop (less than 256 times) the Add Clear (add_clr) instruction 301 is used, to clear the accumulator vector register for the next loop.

With the two instructions Add Clear 301 and Shift Right 302 according to some embodiments of the present disclosure, the full MAC capabilities are utilized by using 2 lanes of the accumulator vector register, with 24 bits each.

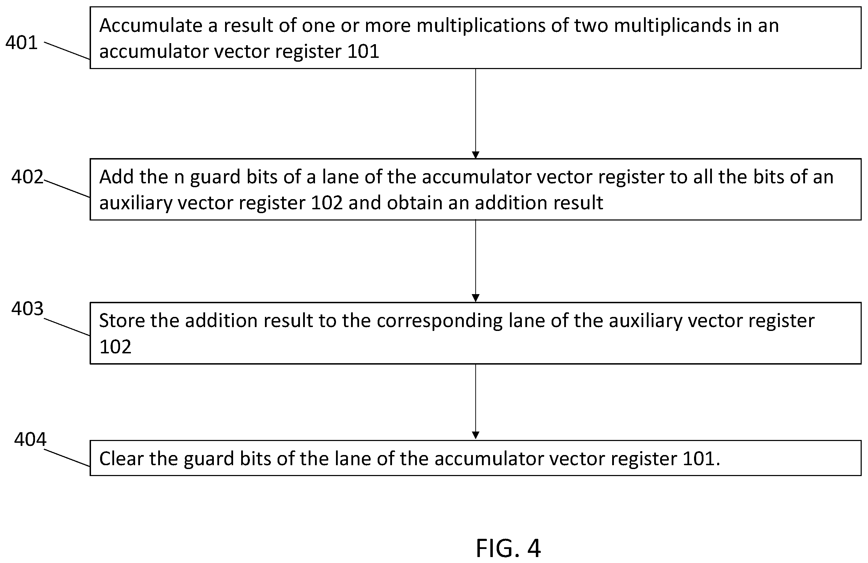

Reference is now made to FIG. 4, which schematically shows a method for an efficient accumulation with an auxiliary register, according to some embodiments of the present disclosure. At 401, an accumulation of a result of one or more multiplications of two multiplicands is carried out, in an accumulator vector register 101. The accumulator vector register 101, has multiple lanes of N bits per lane. The n MSBs of each of the lanes of the accumulator vector register are guard bits. At 402, the n guard bits of a lane of the accumulator vector register are added to all the bits of an auxiliary vector register 102 and an addition result is obtained. The auxiliary vector register 102, having multiple lanes of M bits per lane, where M>n. At 403, the addition result is stored to the corresponding lane of the auxiliary vector register 102, and at 404, the guard bits are cleared of the lane of the accumulator vector register 101.

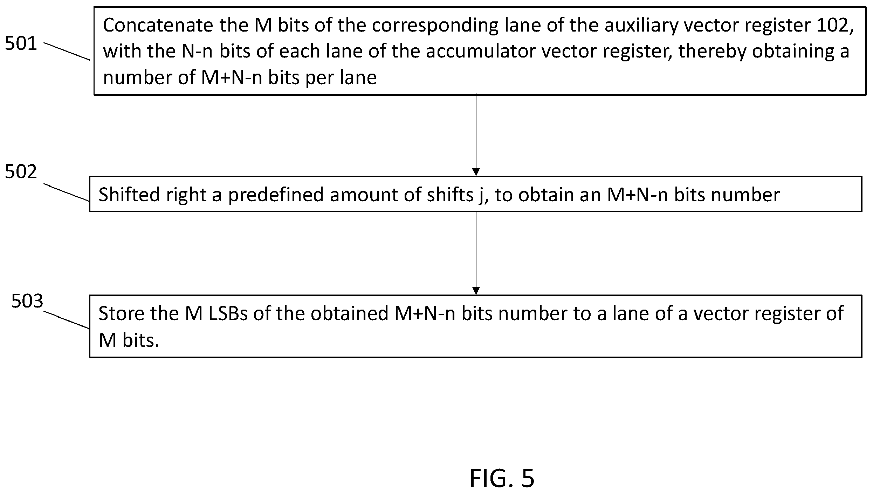

FIG. 5 schematically shows a method for further efficiency accumulation with an auxiliary register, according to some embodiments of the present disclosure. At 501, the M bits of the corresponding lane of the auxiliary vector register 102, are concatenated with the N-n bits of each lane of the accumulator vector register, thereby obtaining a number of M+N-n bits per lane. The M bits of the corresponding lane of the auxiliary register 102 are the MSBs and the N-n bits of the lane of the accumulator vector register 101 are the LSBs. At 502, a predefined amount of shifts j, of the bits are shifted right, to obtain an M+N-n bits number, and at 503, the M LSBs of the obtained M+N-n bits number are stored to a lane of a vector register of M bits. According to some embodiments of the present disclosure, when the obtained M+N-n bits number includes more than M bits, the M+N-n bits number is saturated to a predefined K number of bits, wherein M≥K, and the saturated K LSBs are stored to the vector register of M bits.

According to some embodiments of the present disclosure, a computer program for execution by the processor 100 is disclosed. The computer program calls to the code described above, executed by the processor 100. According to some embodiments of the present disclosure, the computer program further includes program instructions for executing, by the processor, a sequence of operations that includes:
concatenating the M bits of the corresponding lane of the auxiliary vector register with the N-n bits of each lane of the accumulator vector register, thereby obtaining a number of M+N-n bits, wherein the M bits of the corresponding lane of the auxiliary register are the MSBs and the N-n bits of the lane of the accumulator register are the least significant bits, LSBs;
shifting right a predefined amount of shifts j, of the bits, obtaining a M+N-n bits number; and
storing the M LSBs of the obtained M+N-n bits number to a lane of a vector register of M bits.

According to some embodiments of the present disclosure, a non-transitory storage medium storing a computer program for execution by the processor 100 is disclosed. The computer program comprising a call to said code.

The descriptions of the various embodiments have been presented for purposes of illustration, but are not intended to be exhaustive or limited to the embodiments disclosed. Many modifications and variations will be apparent to those of ordinary skill in the art without departing from the scope of the described embodiments. The terminology used herein was chosen to best explain the principles of the embodiments, the practical application or technical improvement over technologies found in the marketplace, or to enable others of ordinary skill in the art to understand the embodiments disclosed herein.

As used herein the term "about" refers to ± 10 %.

The terms "comprises", "comprising", "includes", "including", "having" and their conjugates mean "including but not limited to". This term encompasses the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment may include a plurality of "optional" features unless such features conflict.

Throughout this application, various embodiments may be presented in a range format. It should be understood that the description in range format is merely for convenience and brevity and should not be construed as an inflexible limitation on the scope of embodiments. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integer) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integer numerals therebetween.

It is appreciated that certain features of embodiments, which are, for clarity, described in the context of separate embodiments, may also be provided in combination in a single embodiment. Conversely, various features of embodiments, which are, for brevity, described in the context of a single embodiment, may also be provided separately or in any suitable subcombination or as suitable in any other described embodiment. Certain features described in the context of various embodiments are not to be considered essential features of those embodiments, unless the embodiment is inoperative without those elements.

Although embodiments have been described in conjunction with specific embodiments thereof, it is evident that many alternatives, modifications and variations will be apparent to those skilled in the art. Accordingly, it is intended to embrace all such alternatives, modifications and variations that fall within the broad scope of the appended claims.

In addition, citation or identification of any reference in this application shall not be construed as an admission that such reference is available as prior art to embodiments. To the extent that section headings are used, they should not be construed as necessarily limiting.

## Claims

1. A processor (100), comprising:
at least one accumulator vector register (101) having multiple lanes of N bits per lane, wherein n most significant bits, MSBs, of each lane of the accumulator vector register (101) are guard bits, and
at least one auxiliary vector register (102) having multiple lanes of M bits per lane, where M>n,
a non-transitory memory storing a code for execution by the processor, the code when executed by the processor causing the processor to:
accumulate a result of one or more multiplications of two multiplicands in the at least one accumulator vector register (101);
add the guard bits of each lane of the at least one accumulator vector register (101) to all bits of each corresponding lane of the at least one auxiliary vector register (102) to obtain an addition result;
store the addition result to each corresponding lane of the at least one auxiliary vector register (102); and
clear the guard bits of each lane of the at least one accumulator vector register (101).

2. The processor of claim 1, wherein said code is a first code and the non-transitory memory further stores a second code for execution by the processor, the second code when executed by the processor causing the processor to:
concatenate the M bits of each corresponding lane of the at least one auxiliary vector register (102) with the N-n bits of each lane of the at least one accumulator vector register (101), thereby obtain a number of M+N-n bits, wherein the M bits of each corresponding lane of the at least one auxiliary register are the MSBs and the N-n bits of each lane of the at least one accumulator vector register (101) are the least significant bits, LSBs;
shift right a predefined amount of shifts j, of bits, of each lane obtaining a M+N-n bits number; and
store the M LSBs of the obtained M+N-n bits number of each lane to a corresponding lane of a vector register of M bits.

3. The processor of claim 2, wherein when the obtained M+N-n bits number comprises more than M bits, the M+N-n bits number is saturated to a predefined number of bits K, wherein M≥K; and the K LSBs of the saturated M+N-n bits number are stored to the vector register of M bits.

4. The processor of claim 1, configured to execute the code at predetermined intervals of accumulations of the multiplication products.

5. The processor of any of the previous claims, wherein the accumulation and multiplications are for signed and/or unsigned numbers.

6. A processing method, comprising:
accumulating (401) a result of one or more multiplications of two multiplicands in at least one accumulator vector register (101) having multiple lanes of N bits per lane, wherein n most significant bits, MSBs, of each lane of the at least one accumulator vector register (101) are guard bits;
adding (402) the guard bits of each lane of the at least one accumulator vector register (101) to all bits of a corresponding lane of an at least one auxiliary vector register (102) having multiple lanes of M bits per lane, where M>n, to obtain an addition result;
storing (403) the addition result to each corresponding lane of the at least one auxiliary vector register (102); and
clearing (404) the guard bits of each lane of the at least one accumulator vector register (101).

7. The method of claim 6, further comprising:
concatenating (501) the M bits of each corresponding lane of the at least one auxiliary vector register (102) with the N-n bits of each lane of the at least one accumulator vector register (101), thereby obtaining a number of M+N-n bits per lane, wherein the M bits of each corresponding lane of the at least one auxiliary register are the MSBs and the N-n bits of each lane of the at least one accumulator vector register (101) are the least significant bits, LSBs;
shifting (502) right a predefined amount of shifts j, of bits, of each lane to obtain an M+N-n bits number; and
storing (503) the M LSBs of the obtained M+N-n bits number of each lane to a corresponding lane of a vector register of M bits.

8. The method of claim 7, wherein when the obtained M+N-n bits number comprises more than M bits, the M+N-n bits number is saturated to a predefined K number of bits, wherein M≥K; and the K LSBs of the saturated M+N-n bits number are stored to the vector register of M bits.

9. A computer program for execution by the processor of claim 1, the computer program comprising a call to said code.

10. The computer program of claim 9, further comprising:
program instructions for executing, by the processor, a sequence of operations that comprises:
concatenating the M bits of each corresponding lane of the at least one auxiliary vector register (102) with the M bits of each lane of the at least one accumulator vector register (101), thereby obtaining a number of M+N-n bits, wherein the M bits of each corresponding lane of the at least one auxiliary register are the MSBs and the M bits of each lane of the at least one accumulator register are the least significant bits, LSBs;
shifting right a predefined amount of shifts j, of the bits, of each lane obtaining a M+N-n bits number; and
storing the M LSBs of the obtained M+N-n bits number of each lane to a corresponding lane of a vector register of M bits.

11. A non-transitory storage medium storing a computer program for execution by the processor (100) of claim 1, the computer program comprising a call to said code.

## Patentansprüche

1. Prozessor (100), umfassend:
mindestens ein Akkumulatorvektorregister (101), das mehrere Spuren von N Bits pro Spur aufweist, wobei n höchstwertige Bits, MSBs, jeder Spur des Akkumulatorvektorregisters (101) Schutzbits sind, und
mindestens ein Hilfsvektorregister (102), das mehrere Spuren von M Bits pro Spur aufweist, wobei M>n,
einen nichtflüchtigen Speicher, der einen Code zur Ausführung durch den Prozessor speichert, wobei der Code, wenn er durch den Prozessor ausgeführt wird, den Prozessor zu Folgendem veranlasst:
Akkumulieren eines Ergebnisses einer oder mehrerer Multiplikationen von zwei Multiplikanden in dem mindestens einen Akkumulatorvektorregister (101);
Addieren der Schutzbits jeder Spur des mindestens einen Akkumulatorvektorregisters (101) zu sämtlichen Bits jeder entsprechenden Spur des mindestens einen Hilfsvektorregisters (102), um ein Additionsergebnis zu erlangen;
Speichern des Additionsergebnisses in jeder entsprechenden Spur des mindestens einen Hilfsvektorregisters (102); und
Löschen der Schutzbits jeder Spur des mindestens einen Akkumulatorvektorregisters (101).

2. Prozessor nach Anspruch 1, wobei es sich bei dem Code um einen ersten Code handelt und der nichtflüchtige Speicher ferner einen zweiten Code zur Ausführung durch den Prozessor speichert, wobei der zweite Code, wenn er durch den Prozessor ausgeführt wird, den Prozessor zu Folgendem veranlasst:
Verketten der M Bits jeder entsprechenden Spur des mindestens einen Hilfsvektorregisters (102) mit den N-n Bits jeder Spur des mindestens einen Akkumulatorvektorregisters (101), wodurch eine Anzahl von M+N-n Bits erlangt wird, wobei die M Bits jeder entsprechenden Spur des mindestens einen Hilfsregisters die MSBs sind und die N-n Bits jeder Spur des mindestens einen Akkumulatorvektorregisters (101) die niedrigstwertigen Bits, LSBs, sind;
Verschieben um eine vordefinierte Menge von Verschiebungen j nach rechts, von Bits, jeder Spur, um eine M+N-n Bitanzahl zu erlangen; und
Speichern der M LSBs der erlangten M+N-n Bitanzahl jeder Spur in einer entsprechenden Spur eines Vektorregisters von M Bits.

3. Prozessor nach Anspruch 2, wobei, wenn die erlangte M+N-n Bitanzahl mehr als M Bits umfasst, die M+N-n Bitanzahl auf eine vordefinierte Anzahl von Bits K gesättigt wird, wobei M≥K; und die K LSBs der gesättigten M+N-n Bitanzahl in dem Vektorregister von M Bits gespeichert werden.

4. Prozessor nach Anspruch 1, der dazu konfiguriert ist, den Code in vorbestimmten Intervallen von Akkumulationen der Multiplikationsprodukte auszuführen.

5. Prozessor nach einem der vorhergehenden Ansprüche, wobei die Akkumulation und Multiplikationen für vorzeichenbehaftete und/oder vorzeichenlose Zahlen gelten.

6. Verarbeitungsverfahren, umfassend:
Akkumulieren (401) eines Ergebnisses einer oder mehrerer Multiplikationen von zwei Multiplikanden in mindestens einem Akkumulatorvektorregister (101), das mehrere Spuren von N Bits pro Spur aufweist, wobei n höchstwertige Bits, MSBs, jeder Spur des mindestens einen Akkumulatorvektorregisters (101) Schutzbits sind;
Addieren (402) der Schutzbits jeder Spur des mindestens einen Akkumulatorvektorregisters (101) zu sämtlichen Bits einer entsprechenden Spur eines mindestens einen Hilfsvektorregisters (102), das mehrere Spuren von M Bits pro Spur aufweist, wobei M>n, um ein Additionsergebnis zu erlangen;
Speichern (403) des Additionsergebnisses in jeder entsprechenden Spur des mindestens einen Hilfsvektorregisters (102); und
Löschen (404) der Schutzbits jeder Spur des mindestens einen Akkumulatorvektorregisters (101).

7. Verfahren nach Anspruch 6, ferner umfassend:
Verketten (501) der M Bits jeder entsprechenden Spur des mindestens einen Hilfsvektorregisters (102) mit den N-n Bits jeder Spur des mindestens einen Akkumulatorvektorregisters (101), wodurch eine Anzahl von M+N-n Bits pro Spur erlangt wird, wobei die M Bits jeder entsprechenden Spur des mindestens einen Hilfsregisters die MSBs sind und die N-n Bits jeder Spur des mindestens einen Akkumulatorvektorregisters (101) die niedrigstwertigen Bits, LSBs, sind;
Verschieben (502) um eine vordefinierte Menge von Verschiebungen j nach rechts, von Bits, jeder Spur, um eine M+N-n Bitanzahl zu erlangen; und
Speichern (503) der M LSBs der erlangten M+N-n Bitanzahl jeder Spur in einer entsprechenden Spur eines Vektorregisters von M Bits.

8. Prozessor nach Anspruch 7, wobei, wenn die erlangte M+N-n Bitanzahl mehr als M Bits umfasst, die M+N-n Bitanzahl auf eine vordefinierte K Anzahl von Bits gesättigt wird, wobei M≥K; und die K LSBs der gesättigten M+N-n Bitanzahl in dem Vektorregister von M Bits gespeichert werden.

9. Computerprogramm zur Ausführung durch den Prozessor nach Anspruch 1, wobei das Computerprogramm einen Aufruf des Codes umfasst.

10. Computerprogramm nach Anspruch 9, ferner umfassend:
Programmanweisungen zum Ausführen, durch den Prozessor, einer Abfolge von Vorgängen, die Folgendes umfasst:
Verketten der M Bits jeder entsprechenden Spur des mindestens einen Hilfsvektorregisters (102) mit den M Bits jeder Spur des mindestens einen Akkumulatorvektorregisters (101), wodurch eine Anzahl von M+N-n Bits erlangt wird, wobei die M Bits jeder entsprechenden Spur des mindestens einen Hilfsregisters die MSBs sind und die M Bits jeder Spur des mindestens einen Akkumulatorregisters die niedrigstwertigen Bits, LSBs, sind;
Verschieben um eine vordefinierte Menge von Verschiebungen j nach rechts, der Bits, jeder Spur, um eine M+N-n Bitanzahl zu erlangen; und
Speichern der M LSBs der erlangten M+N-n Bitanzahl jeder Spur in einer entsprechenden Spur eines Vektorregisters von M Bits.

11. Nichtflüchtiges Speichermedium, das ein Computerprogramm zur Ausführung durch den Prozessor (100) nach Anspruch 1 speichert, wobei das Computerprogramm einen Aufruf des Codes umfasst.

## Revendications

1. Processeur (100), comprenant :
au moins un registre vectoriel accumulateur (101) ayant plusieurs voies de N bits par voie, dans lequel les n bits les plus significatifs, MSB, de chaque voie du registre vectoriel accumulateur (101) sont des bits de garde, et
au moins un registre vectoriel auxiliaire (102) ayant plusieurs voies de M bits par voie, où M> n,
une mémoire non transitoire stockant un code destiné à être exécuté par le processeur, le code, lorsqu'il est exécuté par le processeur, amenant le processeur à :
accumuler un résultat d'une ou de plusieurs multiplications de deux multiplicandes dans l'au moins un registre vectoriel accumulateur (101) ;
ajouter les bits de garde de chaque voie de l'au moins un registre vectoriel accumulateur (101) à tous les bits de chaque voie correspondante de l'au moins un registre vectoriel auxiliaire (102) pour obtenir un résultat d'addition ;
stocker le résultat d'addition dans chaque voie correspondante de l'au moins un registre vectoriel auxiliaire (102) ; et
effacer les bits de garde de chaque voie de l'au moins un registre vectoriel d'accumulateur (101).

2. Processeur selon la revendication 1, dans lequel ledit code est un premier code et la mémoire non transitoire stocke en outre un second code destiné à être exécuté par le processeur, le second code, lorsqu'il est exécuté par le processeur, amenant le processeur à :
concaténer les M bits de chaque voie correspondante de l'au moins un registre vectoriel auxiliaire (102) avec les N- n bits de chaque voie de l'au moins un registre vectoriel accumulateur (101), obtenir ainsi un nombre de M+ N- n bits, dans lequel les M bits de chaque voie correspondante de l'au moins un registre auxiliaire sont les MSB et les N- n bits de chaque voie de l'au moins un registre vectoriel accumulateur (101) sont les bits les moins significatifs, LSB ;
décaler vers la droite un nombre prédéfini de décalages j, de bits, de chaque voie obtenant un nombre de bits M+ N- n ; et
stocker les M LSB du nombre de bits M+ N- n obtenus de chaque voie dans une voie correspondante d'un registre vectoriel de M bits.

3. Processeur selon la revendication 2, dans lequel, lorsque le nombre de bits M+ N- n obtenu comprend plus de M bits, le nombre de bits M+ N-n est saturé à un nombre prédéfini de bits K, dans lequel M≥ K ; et les K LSB du nombre de bits M+ N- n saturé sont stockés dans le registre vectoriel de M bits.

4. Processeur selon la revendication 1, configuré pour exécuter le code à des intervalles prédéterminés d'accumulations des produits de multiplication.

5. Processeur selon l'une quelconque des revendications précédentes, dans lequel l'accumulation et les multiplications concernent des nombres signés et/ou non signés.

6. Procédé de traitement, comprenant :
l'accumulation (401) d'un résultat d'une ou de plusieurs multiplications de deux multiplicandes dans au moins un registre vectoriel accumulateur (101) ayant plusieurs voies de N bits par voie, dans lequel les n bits les plus significatifs, MSB, de chaque voie de l'au moins un registre vectoriel accumulateur (101) sont des bits de garde ;
l'addition (402) des bits de garde de chaque voie de l'au moins un registre vectoriel accumulateur (101) à tous les bits d'une voie correspondante d'au moins un registre vectoriel auxiliaire (102) ayant plusieurs voies de M bits par voie, où M> n, pour obtenir un résultat d'addition ;
le stockage (403) du résultat d'addition dans chaque voie correspondante de l'au moins un registre vectoriel auxiliaire (102) ; et
l'effacement (404) des bits de garde de chaque voie de l'au moins un registre vectoriel d'accumulateur (101).

7. Procédé selon la revendication 6, comprenant en outre :
la concaténation (501) des M bits de chaque voie correspondante de l'au moins un registre vectoriel auxiliaire (102) avec les N-n bits de chaque voie de l'au moins un registre vectoriel accumulateur (101), et ainsi l'obtention d'un nombre de M+ N- n bits par voie, dans lequel les M bits de chaque voie correspondante de l'au moins un registre auxiliaire sont les MSB et les N- n bits de chaque voie de l'au moins un registre vectoriel accumulateur (101) sont les bits les moins significatifs, LSB ;
le décalage (502) vers la droite d'un nombre prédéfini de décalages j, de bits, de chaque voie pour obtenir un nombre de bits M+ N- n ; et
le stockage (503) des M LSB du nombre de bits M+N-n obtenus de chaque voie dans une voie correspondante d'un registre vectoriel de M bits.

8. Procédé selon la revendication 7, dans lequel, lorsque le nombre de bits M+ N- n obtenu comprend plus de M bits, le nombre de bits M+ N- n est saturé à un nombre K prédéfini de bits, dans lequel M≥ K ; et les K LSB du nombre de bits M+ N- n saturé sont stockés dans le registre vectoriel de M bits.

9. Programme informatique destiné à être exécuté par le processeur selon la revendication 1, le programme informatique comprenant un appel audit code.

10. Programme informatique selon la revendication 9, comprenant en outre :
des instructions de programme pour l'exécution, par le processeur, d'une séquence d'opérations qui comprend :
la concaténation des M bits de chaque voie correspondante de l'au moins un registre vectoriel auxiliaire (102) avec les M bits de chaque voie de l'au moins un registre vectoriel accumulateur (101), et ainsi l'obtention d'un nombre de M+ N- n bits par voie, dans lequel les M bits de chaque voie correspondante de l'au moins un registre auxiliaire sont les MSB et les M bits de chaque voie de l'au moins un registre accumulateur sont les bits les moins significatifs, LSB ;
le décalage vers la droite d'un nombre prédéfini de décalages j, des bits, de chaque voie obtenant un nombre de bits M+ N- n ; et
le stockage des M LSB du nombre de bits M+ N- n obtenus de chaque voie dans une voie correspondante d'un registre vectoriel de M bits.

11. Support de stockage non transitoire stockant un programme informatique destiné à être exécuté par le processeur (100) selon la revendication 1, le programme informatique comprenant un appel audit code.
